# EUROPEAN PATENT APPLICATION

(11) **EP 2 434 819 A1**
(43) Date of publication of application: **28.03.2012**
(21) Application number: 10785674.2
(22) Date of filing: 25.03.2010
(51) Int. Cl.: H04W 72/00

(54) **METHOD FOR MODIFYING MEASUREMENT CONFIGURATION IN LONG TERM EVOLUTION SYSTEM AND APPARATUS THEREOF**

(30) Priority: 10.06.2009 CN 200910203751
(71) Applicant: ZTE Corporation, Shenzhen, Guangdong 518057 (CN)
(72) Inventor: WANG, Yi, Shenzhen Guangdong 518057 (CN)
(74) Representative: Bokinge, Ole
(86) International application number: PCT/CN2010/071318
(87) International publication number: WO 2010/142161

(57) **Abstract**

The present invention discloses a method for modifying measurement configuration in a Long Term Evolution (LTE) system, includes: when an Evolved NodeB (eNB) configures measurement configuration information of User Equipment (UE), if the measurement configuration information corresponding to a measurement identity of said UE is modified, indicating said UE: to remove all of original measurement object information and report configuration information corresponding to said measurement identity at first, and then to add modified measurement object information and report configuration information corresponding to said measurement identity. The present invention further discloses a corresponding apparatus. The present invention saves the memory capacity of the eNB, and simplifies the processing flow of the eNB, and also simplifies the processing flow of the UE at the same time.

## Description

### Technical Field

The present invention relates to the mobile communication field, and particularly, to a method and apparatus for modifying measurement configuration in a Long Term Evolution (LTE) system.

### Background of the Related Art

In the LTE system, an Evolved NodeB (eNB) will send the measurement configuration to the User Equipment (UE) in the ACTIVE state or modify the original measurement configuration of the UE through the RRCReconfiguration message according to practical cases, and the UE will carry out the measurement on the serving cell and/or neighbour cells according to the latest sent measurement configuration of eNB and report the measurement report message to the eNB.

According to the description of the protocol 36.331, when the measurement object ID (MeasObjectId) of the measurement configuration sent this time is the same with the MeasObjectId that the UE has already had but the destination cell corresponding to this MeasObjectId changes, the modification of the measurement configuration is completed by correctly filling in two lists of the cell addition modification list (cellsToAddModifyList) and the cell removal list (cellsToRemoveList) corresponding to the MeasObjectId. This processing is divided into a plurality of following cases:
1. the range of the measurement destination cell which requires sending this time is larger than the range of the measurement destination cell that the UE has already had. At this time, the eNB is required to correctly fill the additional cell information that the new configuration is more than the original configuration into the cellsToAddModifyList corresponding to this MeasObjectId;
2. the range of the measurement destination cell which requires sending this time is smaller than the range of the measurement destination cell that the UE has already had. At this time, the eNB is required to correctly fill the reduced cell information that the new configuration is less than the original configuration into the cellsToRemoveList corresponding to this MeasObjectId;
3. other cases. At this time, the eNB is required to correctly fill in the cellsToAddModifyList and the cellsToRemoveList corresponding to this MeasObjectId so as to ensure that the UE is able to receive the correct measurement destination cells.

No matter the modification of the measurement configuration belongs to which case above, the eNB is required to:
1. also store the list of the destination cell information corresponding to this MeasObjectId at the same time for use in the subsequent measurement configuration modification besides storing the MeasObjectId when the measurement configuration is sent every time, which undoubtedly increases the use of the memory capacity.
2. Before sending down the measurement configuration modification, the eNB is required to compare information of the original destination cell list and information of the current destination cell list one by one so as to correctly fill in the cellsToAddModifyList and cellsToRemoveList corresponding to the current MeasObjectId to ensure to correctly send down the destination cell information to the UE, which undoubtedly makes the eNB increase processing flows before sending down the measurement configuration modification, and makes the sending down measurement configuration modification very cumbersome.

At the same time, when the measurement configuration is received every time, the UE is required to use the information of the cellsToAddModifyList and cellsToRemoveList information corresponding to the received MeasObjectId to compare and modify the own previously stored measurement object information one by one so as to ensure the correctness of the measurement object, which also undoubtedly makes the processing flows of the UE side cumbersome.

### Summary of the Invention

The technical problem to be solved in the present invention is to propose a method and apparatus for modifying measurement configuration in a LTE system for the purposes of overcoming three drawbacks of the larger occupied memory, the processing flow of the eNB side filling in the measurement configuration information being cumbersome and the processing flow of the UE side analyzing the measurement configuration information and modifying own cached measurement configuration information being cumbersome caused by the eNB being required to store the related information of the measurement destination cell corresponding to the current MeasObjectId when the eNB relates to sending down and modifying the measurement configuration in the prior art.

In order to solve the above technical problem, the present invention provides a method for modifying measurement configuration in a LTE system, and the method comprises:
when an Evolved NodeB (eNB) configures measurement configuration information of User Equipment (UE), if the measurement configuration information corresponding to a measurement identity of said UE is modified, indicating said UE:
   to remove all of original measurement object information and report configuration information corresponding to said measurement identity, and then to add modified measurement object information and report configuration information corresponding to said measurement identity.

The above method can further include following characteristics:
said measurement object information is: measurement configuration information corresponding to a measurement object identity;
said report configuration information is: measurement configuration information corresponding to a report configuration identity.

The above method can further include following characteristics:
in the step of indicating said UE to remove, said eNB respectively fills all of original measurement object identities and report configuration identities corresponding to said measurement identity into a measurement object removal list and a report configuration removal list of the measurement configuration sent to the UE so as to indicate said UE to remove.

The above method can further include following characteristics:
in the step of indicating said UE to add, said eNB respectively fills modified measurement object information and report configuration information corresponding to said measurement identity into a measurement object addition modification list and a report configuration addition modification list of the measurement configuration sent to the UE so as to indicate said UE to add.

The above method specifically comprises:
in the step of indicating said UE, before removing, further comprising: said eNB respectively filling the measurement object identity and report configuration identity corresponding to said measurement identity into a measurement object removal list and a report configuration removal list included in the measurement configuration in sequence;
before adding, further comprising: said eNB respectively filling the measurement object identity and report configuration identity corresponding to said measurement identity in sequence into a measurement object addition modification list and a report configuration addition modification list included in said measurement configuration, and using modified measurement configuration information to fill in other information elements in the measurement object addition modification list and the report configuration addition modification list;
further comprising: said eNB using the modified measurement configuration information to fill in other information elements in said measurement configuration, and sending said measurement configuration to the UE.

The above method can further include following characteristics:
said UE receiving said measurement configuration, removing all of the original measurement object information and report configuration information corresponding to said measurement identity according to said measurement object removal list and report configuration removal list; and adding the modified measurement object information and report configuration information corresponding to said measurement identity according to said measurement object addition modification list and report configuration addition modification list.

In order to solve the above technical problem, the present invention provides an apparatus for modifying measurement configuration in a Long Term Evolution (LTE) system, said apparatus comprises a judgment module, a removal module and an addition module, and said apparatus being applied in an Evolved NodeB (eNB), wherein
said judgment module is configured to: judge whether measurement configuration information corresponding to a measurement identity of UE is modified, and if it is modified, notifying the removal module;
said removal module is connected with said judgment module, and said removal module is configured to: indicate said UE to remove all of original measurement object information and report configuration information corresponding to said measurement identity when the judgment module notifies that the measurement configuration information corresponding to the measurement identity of the UE is modified;
said addition module is connected with said removal module, and said addition module is configured to: indicate said UE to add modified measurement object information and report configuration information corresponding to said measurement identity.

The above apparatus can further include following characteristics:
said measurement object information is: measurement configuration information corresponding to a measurement object identity;
said report configuration information is: measurement configuration information corresponding to a report configuration identity.

The above apparatus can further include following characteristics:
said removal module is further configured to: respectively fill all of original measurement object identities and report configuration identities corresponding to said measurement identity into a measurement object removal list and a report configuration removal list of the measurement configuration sent to the UE so as to indicate said UE to remove all of original measurement object information and report configuration information corresponding to said measurement identity.

The above apparatus can further include following characteristics:
said addition module is further configured to: respectively fill modified measurement object information and report configuration information corresponding to said measurement identity into a measurement object addition modification list and a report configuration addition modification list of the measurement configuration sent to the UE so as to indicate said UE to add modified measurement object information and report configuration information corresponding to said measurement identity.

Comparing with the prior art, since the method and apparatus of the present invention uses the technique measure of directly filling the corresponding MeasObjectId and reportConfigId into the removal list at first and then filling into the addition modification list when the measurement configuration requires modifying, firstly the method and apparatus of the present invention omit the step of caching the related information of the destination cell list corresponding to the MeasObjectId in the original technology, thereby saving the memory capacity of the eNB; secondly, the method and apparatus of the present invention makes the eNB have no need to compare the difference between the new and old configuration one by one at first and then make modification when the eNB fills in the related information of the destination cell list corresponding to the MeasObjectId, and the eNB is only required to fill the information corresponding to the new configuration, thereby simplifying the processing flow of the eNB; thirdly, the method and apparatus of the present invention makes the UE have no need to compare and modify own stored measurement object information one by one according to the information element in the measObjectToAddModifyList corresponding to the MeasObjectId when receiving measurement configuration information, and the UE is only required to carry out the removal and then addition processing once on the MeasObjectId and corresponding information thereof, thereby also simplifying the processing flow of the UE.

### Brief Description of Drawings

FIG. 1 is a flow chart according to the example of the present invention;
FIG. 2 is a schematic diagram of apparatus according to the example of the present invention.

### Preferred Embodiments of the Present Invention

In the present invention, when the eNB configures the measurement configuration information of the UE, if the measurement configuration information corresponding to the measurement identity of said UE is modified, then the eNB indicates said UE to: firstly remove all of the original measurement object information and report configuration information corresponding to said measurement identity, and then add the modified measurement object information and report configuration information corresponding to said measurement identity.

Wherein said measurement object information particularly refers to: the measurement configuration information corresponding to the measurement object identity; and said report configuration information particularly refers to: the measurement configuration information corresponding to the report configuration identity.

Preferably, said eNB indicates said UE to remove all of the original measurement object information and report configuration information corresponding to said measurement identity by respectively filling all of the original measurement object identities and report configuration identities corresponding to said measurement identity into the measurement object removal list and report configuration removal list of the measurement configuration sent to the UE.

Preferably, said eNB indicates said UE to add modified measurement object information and report configuration information corresponding to said measurement identity by respectively filling the modified measurement object information and report configuration information corresponding to said measurement identity into the measurement object addition modification list and report configuration addition modification list of the measurement configuration sent to the UE.

Below it will describe the present invention in detail in combination with the figures and particular examples.

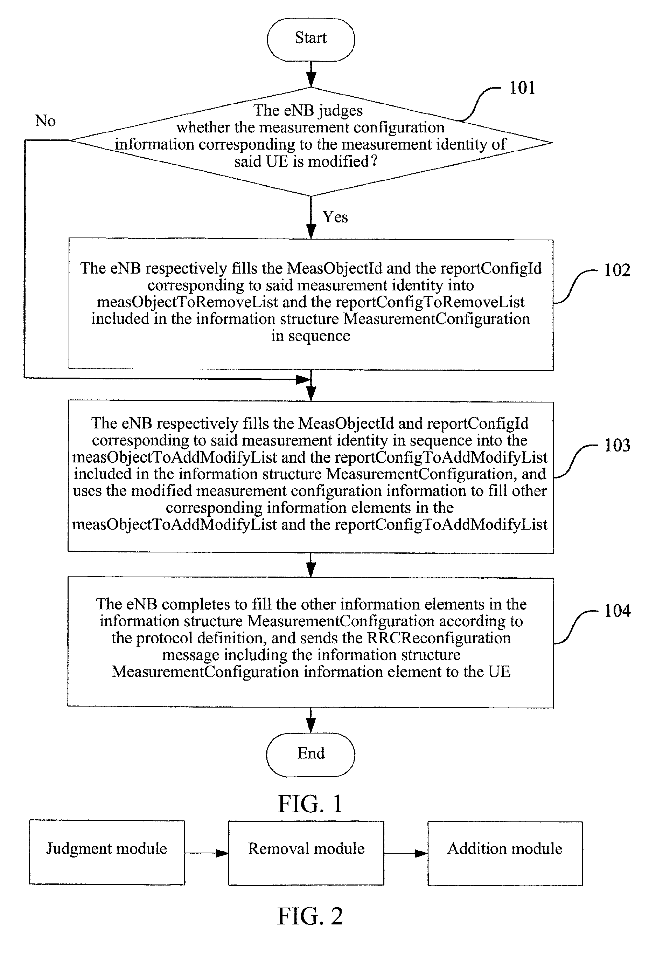

As shown in FIG. 1, the method of the example of the present invention comprises following steps:
step 101, when the eNB configures the measurement configuration information of the UE, the eNB judges whether the measurement configuration information corresponding to the measurement identity of said UE is modified, and if yes, carries out the step 102, otherwise the eNB is required to send the new measurement configuration information, and carries out the step 103;
   wherein if the destination cell corresponding to the MeasObjectId corresponding to the measurement identity of said UE changes, then the measurement configuration information corresponding to the measurement identity of the UE is modified;
step 102, the eNB respectively fills the MeasObjectId and the report configuration ID (reportConfigId) corresponding to said measurement identity into the measurement object removal list (measObjectToRemoveList) and the report configuration removal list (reportConfigToRemoveList) included in the information structure measurement configuration (MeasurementConfiguration) in sequence;
   wherein the MeasObjectId corresponding to the measurement identity can be one or more, and each MeasObjectId corresponds to one or more reportConfigId;
step 103, the eNB respectively fills the MeasObjectId and reportConfigId corresponding to said measurement identity into measurement object addition modification list (measObjectToAddModifyList) and the report configuration addition modification list (reportConfigToAddModifyList) included in the information structure MeasurementConfiguration, and uses the modified measurement configuration information to fill other corresponding information elements in the measObjectToAddModifyList and the reportConfigToAddModifyList;
   wherein MeasObjectId and reportConfigId filled by the eNB in the step 103 can be the same with the removed MeasObjectId and reportConfigId in the step 102, namely the MeasObjectId and reportConfigId do not change; and also can not be the same with the removed MeasObjectId and reportConfigId in the step 102, namely the MeasObjectId and/or reportConfigId changes;
step 104, the eNB completes to fill the other information elements in the MeasurementConfiguration according to the protocol definition, and sends the RRCReconfiguration message including the MeasurementConfiguration information element to the UE.

Other information elements in the step 104 include the configuration information of the measurement and the configuration information of the measurement gap.

Said UE receives the RRCReconfiguration message including said MeasurementConfiguration information element, and removes all of the original measurement object information and report configuration information corresponding to said measurement identity according to the measObjectToRemoveList and reportConfigToRemoveList in said MeasurementConfiguration; and adds the modified measurement object information and report configuration information corresponding to said measurement identity according to the measObjectToAddModifyList and reportConfigToAddModifyList in said MeasurementConfiguration; and carries out corresponding processing according to other information elements in said MeasurementConfiguration.

In step 101, if the eNB judges that the measurement configuration information corresponding to the measurement identity of said UE is not modified, namely the eNB is required to send the new measurement configuration information, and carries out steps 103∼104, which is the same with the prior art, and thus the method for modifying measurement configuration proposed in the present invention is able to integrate with the existing method for sending the new measurement configuration information very well without modifying excessive flows.

As shown in FIG. 2, the apparatus for modifying measurement configuration in a LTE system according to the example of the present invention is applied in the eNB, and the apparatus comprises a judgment module, a removal module and an addition module,
said judgment module is used for judging whether the measurement configuration information corresponding to the measurement identity of the UE is modified, and if it is modified, notifies the removal module;
the removal module is connected with said judgment module, and the removal module is used for indicating said UE to remove all of the original measurement object information and report configuration information corresponding to said measurement identity at first when the judgment module notifies the removal module that the measurement configuration information corresponding to the measurement identity of the UE is modified;
said addition module is connected with said removal module, and the addition module is used for indicating said UE to add the modified measurement object information and report configuration information corresponding to said measurement identity.

Said removal module is further used for indicating said UE to remove all of the original measurement object information and report configuration information corresponding to said measurement identity by respectively filling all of the original MeasObjectId and reportConfigId corresponding to said measurement identity into the measObjectToRemoveList and the reportConfigToRemoveList of the MeasurementConfiguration sent to the UE.

Said addition module is further used for indicating said UE to add the modified measurement object information and report configuration information corresponding to said measurement identity by respectively filling the modified measurement object information and report configuration information corresponding to said measurement identity into the measObjectToAddModifyList and reportConfigToAddModifyList of the MeasurementConfiguration sent to the UE.

Below it will further illustrate the present invention in detail by taking the related measurement configuration modification when the eNB carries out the internal intra-frequency handoff as an application example.

It is assumed that the serving cell is A before the handoff, and the cell is B after the handoff, and B, C, and D are neighbor cells of the A, and A, C and E are neighbor cells of the B, and the MeasObjectId corresponding to the intra-frequency measurement identity is 1, and the reportConfigIds respectively are 1, 2, and 3.

The step of filling the measurement configuration before the handoff comprises:
1. it is judged whether the measurement configuration is modified, and herein the measurement configuration modification does not exist;
2. firstly the MeasObjectId (the value is 1) is filled into the measObjectToAddModifyList included in the measurement configuration information structure MeasurementConfiguration, and information of cells A, B, C and D is filled into the cellsToAddModifyList corresponding to the MeasObjectId (the value is 1), and the other fields in the measObjectToAddModifyList are filled; then the reportConfigIds (the values are 1, 2, and 3) are filled into the reportConfigToAddModifyList included in the information structure MeasurementConfiguration, and other fields in the reportConfigToAddModifyList are filled;
3. other information elements in the MeasurementConfiguration are filled according to the protocol definition.

The step of filling the measurement configuration after the handoff comprises:
1. it is judged whether the measurement configuration is modified, and herein the measurement configuration modification exists;
2. the corresponding MeasObjectId (the value is 1) and reportConfigIds (the values are 1, 2, and 3) are respectively filled into the measObjectToRemoveList and reportConfigToRemoveList included in the information structure MeasurementConfiguration in sequence;
3. firstly the MeasObjectId (the value is 1) is filled into the measObjectToAddModifyList included in the measurement configuration information structure MeasurementConfiguration, and information of the cells B, A, C and E is filled into the cellsToAddModifyList corresponding to the MeasObjectId (the value is 1), and other fields in the measObjectToAddModifyList are filled; and then reportConfigIds (the values are 1, 2, and 3) are respectively filled into the reportConfigToAddModifyList included in the information structure MeasurementConfiguration and other fields in the reportConfigToAddModifyList are filled;
3. the other information elements in the MeasurementConfiguration are filled according to the protocol definition.

Certainly, the present invention can also have other various examples, and various corresponding modifications and transformations can be made by the person skilled in the art according to the present invention without departing from the spirit or essence of the present invention, however such corresponding modifications and transformations shall all fall into the protection scope of the appended claims of the present invention.

### Industrial Applicability

Since the present invention uses the technique measure of directly filling the corresponding MeasObjectId and reportConfigId into the removal list at first and then filling into the addition modification list when the measurement configuration requires modifying, firstly the present invention omits the step of caching the related information of the destination cell list corresponding to the MeasObjectId in the original technology, thereby saving the memory capacity of the eNB; secondly, the present invention makes the eNB have no need to compare the difference between the new and old configuration one by one at first and then make modification when the eNB fills the related information of the destination cell list corresponding to the MeasObjectId, and the eNB is only required to fill the information corresponding to the new configuration, thereby simplifying the processing flow of the eNB; thirdly, the present invention makes the UE have no need to compare and modify own stored measurement object information one by one according to the information element in the measObjectToAddModifyList corresponding to the MeasObjectId when receiving measurement configuration information, and the UE is only required to carry out the removal and then addition processing once on the MeasObjectId and corresponding information thereof, thereby also simplifying the processing flow of the UE.

## Claims

1. A method for modifying measurement configuration in a Long Term Evolution (LTE) system, comprising:
when an Evolved NodeB (eNB) configures measurement configuration information of User Equipment (UE), if the measurement configuration information corresponding to a measurement identity of said UE is modified, indicating said UE:
to remove all of original measurement object information and report configuration information corresponding to said measurement identity, and then to add modified measurement object information and report configuration information corresponding to said measurement identity.

2. The method as claimed in claim 1, wherein
said measurement object information is: the measurement configuration information corresponding to a measurement object identity;
said report configuration information is: the measurement configuration information corresponding to a report configuration identity.

3. The method as claimed in claim 1 or 2, wherein
in the step of indicating said UE to remove, said eNB respectively fills all of original measurement object identities and report configuration identities corresponding to said measurement identity into a measurement object removal list and a report configuration removal list of the measurement configuration sent to the UE so as to indicate said UE to remove.

4. The method as claimed in claim 1 or 2, wherein
in the step of indicating said UE to add, said eNB respectively fills the modified measurement object information and report configuration information corresponding to said measurement identity into a measurement object addition modification list and a report configuration addition modification list of the measurement configuration sent to the UE so as to indicate said UE to add.

5. The method as claimed in claim 1 or 2, wherein
in the step of indicating said UE, before removing, further comprises: said eNB respectively filling the measurement object identity and report configuration identity corresponding to said measurement identity into a measurement object removal list and a report configuration removal list included in the measurement configuration in sequence;
before adding, further comprises: said eNB respectively filling the measurement object identity and report configuration identity corresponding to said measurement identity in sequence into a measurement object addition modification list and a report configuration addition modification list included in said measurement configuration, and using modified measurement configuration information to fill in other information elements in the measurement object addition modification list and the report configuration addition modification list;
further comprises: said eNB using the modified measurement configuration information to fill in other information elements in said measurement configuration, and sending said measurement configuration to the UE.

6. The method as claimed in claim 5, which further comprises:
said UE receiving said measurement configuration, removing all of the original measurement object information and report configuration information corresponding to said measurement identity according to said measurement object removal list and report configuration removal list; and adding the modified measurement object information and report configuration information corresponding to said measurement identity according to said measurement object addition modification list and report configuration addition modification list.

7. An apparatus for modifying measurement configuration in a Long Term Evolution (LTE) system, said apparatus comprising a judgment module, a removal module and an addition module, and said apparatus being applied in an Evolved NodeB (eNB), wherein
said judgment module is configured to: judge whether measurement configuration information corresponding to a measurement identity of UE is modified, and if modified, notify the removal module;
said removal module is connected with said judgment module, and said removal module is configured to: indicate said UE to remove all of original measurement object information and report configuration information corresponding to said measurement identity when the judgment module notifies that the measurement configuration information corresponding to the measurement identity of the UE is modified;
said addition module is connected with said removal module, and said addition module is configured to: indicate said UE to add modified measurement object information and report configuration information corresponding to said measurement identity.

8. The apparatus as claimed in claim 7, wherein
said measurement object information is: the measurement configuration information corresponding to a measurement object identity;
said report configuration information is: the measurement configuration information corresponding to a report configuration identity.

9. The apparatus as claimed in claim 7, wherein
said removal module is further configured to: respectively fill all of original measurement object identities and report configuration identities corresponding to said measurement identity into a measurement object removal list and a report configuration removal list of the measurement configuration sent to the UE so as to indicate said UE to remove all of the original measurement object information and report configuration information corresponding to said measurement identity.

10. The apparatus as claimed in claim 7, wherein
said addition module is further configured to: respectively fill the modified measurement object information and report configuration information corresponding to said measurement identity into a measurement object addition modification list and a report configuration addition modification list of the measurement configuration sent to the UE so as to indicate said UE to add the modified measurement object information and report configuration information corresponding to said measurement identity.
